# EUROPEAN PATENT APPLICATION

(11) **EP 3 889 481 A1**
(43) Date of publication of application: **06.10.2021**
(21) Application number: 19888896.8
(22) Date of filing: 29.11.2019
(51) Int. Cl.: F16K 31/06, B29C 45/26

(54) **ELETROMAGNETIC COIL, MOLD, AND ELECTROMAGNETIC COIL MANUFACTURING METHOD**

(30) Priority: 30.11.2018 CN 201811458385; 30.11.2018 CN 201811453683
(71) Applicant: Zhejiang Sanhua Intelligent Controls CO., Ltd., Shaoxing, Zhejiang 312500 (CN)
(72) Inventor: OUYANG, Binbin, Shaoxing, Zhejiang 312500 (CN); WANG, Chunlin, Shaoxing, Zhejiang 312500 (CN); LI, Jingjing, Shaoxing, Zhejiang 312500 (CN)
(74) Representative: Maikowski & Ninnemann Patentanwälte Partnerschaft mbB
(86) International application number: PCT/CN2019/121971
(87) International publication number: WO 2020/108617

(57) **Abstract**

An eletromagnetic coil, a mold, and an electromagnetic coil manufacturing method. The eletromagnetic coil comprises an annular main body, and an inner peripheral wall of the annular main body comprises multiple claw poles arranged at intervals in a circumferential direction. The electromagnetic coil further comprises an encapsulation layer, and the encapsulation layer is capable of encapsulating an upper annular wall, a lower annular wall, and an outer peripheral wall of the annular main body. The encapsulation layer is not disposed between the claw poles, and is formed by injection molding of a resin material. In the electromagnetic coil provided in the present invention, the encapsulation layer is not disposed between the claw poles of the inner peripheral wall of the annular main body, such that after moisture having entered the interior of the coil can be discharged therefrom within a short time.

## Description

This application claims the priorities to the following two Chinese patent applications, both of which are incorporated herein by reference, 1) Chinese Patent Application No. 201811458385.0, titled "MOLD, AND ELECTROMAGNETIC COIL MANUFACTURING METHOD", filed with the China National Intellectual Property Administration on November 30, 2018; and 2) Chinese Patent Application No. 201811453683.0, titled "ELECTROMAGNETIC COIL", filed with the China National Intellectual Property Administration on November 30, 2018.

### FIELD

The present application relates to the technical field of refrigeration control, and in particular to an electromagnetic coil, a mold, and a method for manufacturing the electromagnetic coil.

### BACKGROUND

An electromagnetic coil is generally included in a refrigeration system. For example, in an electronic expansion valve, an electromagnetic coil is used as a stator, and a rotor is driven to rotate in the electronic expansion valve when the electromagnetic coil is energized, which achieves the purpose of controlling the flow of refrigerant. The electromagnetic coil generally includes a stator shell, an electromagnetic pole plate and an encapsulation body. For the encapsulation body, there is a common structure in the form of outer encapsulation, that is, the encapsulation material encapsulates the stator shell as a whole, and further fills the gap between the stator shell and a claw pole of the electromagnetic pole plate. In the electromagnetic coil with this structure, the moisture may enter between the claw pole and the encapsulation layer by means of infiltration, and it may exist at the joint between the stator shell and the encapsulation layer for a relatively long time. Since the moisture is not easy to be discharged from the coil interior, the electromagnetic coil is adversely affected.

Therefore, how to provide an electromagnetic coil, which may discharge moisture in a relatively short time after it enters the electromagnetic coil, is a technical problem to be solved presently by those skilled in the art.

### SUMMARY

In order to solve the above technical problems, an electromagnetic coil is provided by the present application, including an annular body, and an inner peripheral wall of the annular body includes multiple claw poles and frames spaced apart in a circumferential direction. The electromagnetic coil further includes an encapsulation layer, and the encapsulation layer encapsulates an upper annular wall, a lower annular wall, and an outer peripheral wall of the annular body. Moreover, the encapsulation layer is not provided between each of the claw poles, the encapsulation layer is formed of a resin material by injection molding, the frame includes a sealing part, and the frame is made of a thermoplastic material.

In the electromagnetic coil provided by the present application, the encapsulation layer is only arranged on the upper annular wall, the lower annular wall and the outer peripheral wall of the annular body, and the inner peripheral wall including multiple claw poles is not provided with the encapsulation layer, so that moisture may be discharged from the coil in a relatively short time after entering the coil.

A mold is further provided by the present application. In the injection molding process for the electromagnetic coil, the first abutting part axially abuts against the upper annular wall of the annular body of the coil, and the second abutting part axially abuts against the lower annular wall of the annular body, so that the encapsulation layer is only arranged on the upper annular wall, the lower annular wall and the outer peripheral wall of the annular body; however, there is no encapsulation layer between the claw poles, so the injection molding pressure required for processing the encapsulation layer is small, and the moisture may be discharged from the coil in a relatively short time after entering the coil.

A method for manufacturing the electromagnetic coil is further provided by the present application. Since the above-mentioned mold has the above technical effect, the method for manufacturing the electromagnetic coil by using the mold should also have similar technical effect, so it is not repeated here.

### BRIEF DESCRIPTION OF THE DRAWINGS

FIG. 1 is a schematic diagram of the structure of an electromagnetic coil provided by the present application;
FIG. 2 is a schematic diagram of the structure of an annular body in FIG. 1;
FIG. 3 is a schematic diagram of the structure of an assembly in FIG. 1;
FIG. 4 is a schematic diagram of the structure of a stator shell in FIG. 1;
FIG. 5 is a schematic diagram of the structure of an electromagnetic pole plate in FIG. 1;
FIG. 6 is a schematic diagram of the structure of a winding in FIG. 1;
FIG. 7 is a schematic diagram of the structure of the electromagnetic coil provided with a cap provided by the present application;
FIG. 8 is a partial schematic diagram of an electromagnetic coil sealing part in FIG. 1;
FIG. 9 is a schematic cross-sectional diagram of a mold in a first and fourth embodiments provided by the present application;
FIG. 10 is a schematic cross-sectional diagram of a mold in a second and fifth embodiments provided by the present application;
FIG. 11 is a schematic cross-sectional diagram of a mold in a third embodiment provided by the present application;

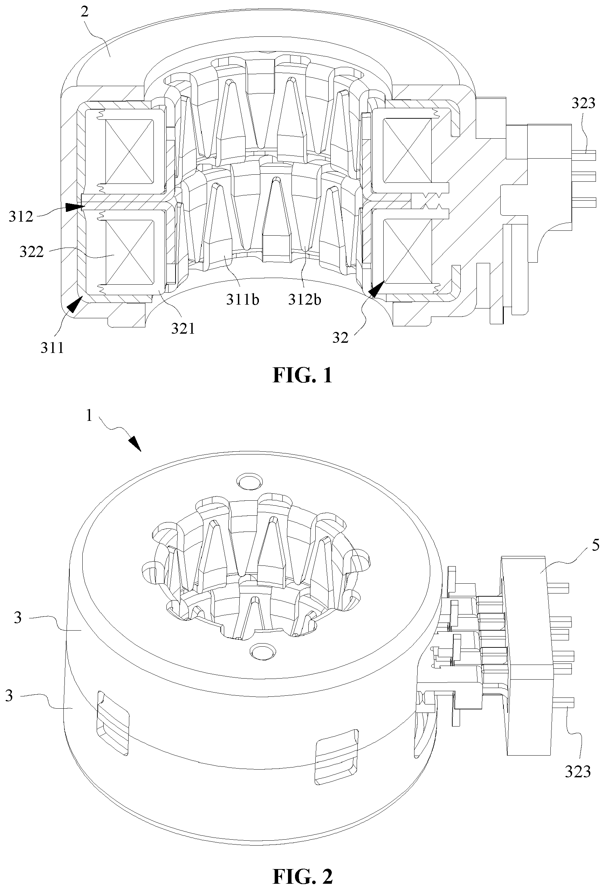

Reference numerals in Figure 1 to Figure 11:
1 annular body;
2 encapsulation layer;
3 assembly, 31 shell, 311 stator shell, 311a first annular wall, 311b first claw pole, 311c cylinder wall, 312 electromagnetic pole plate, 312a second annular wall, 312b second claw pole, 32 winding, 321 frame, 3211 first collar portion, 32111 pin holding part, 3212 second collar portion, 3213 sealing part, 322 wire, 323 pin;
4 mold, 41 upper mold, 411 first core part, 4111 first abutting part, 4112 first groove part, 4113 first protrusion part, 4114 first recess part, 412 upper mold body part, 42 lower mold, 421 second core part, 4211 second abutting part, 4212 second groove part, 4213 second protrusion part, 422 lower mold body part;
5 insulating sleeve;
6 sealing cap.

### DETAILED DESCRIPTION OF THE EMBODIMENTS

In order to provide those skilled in the art a better understanding of the solutions of the present application, the present application is described hereinafter in further detail in conjunction with the drawings and embodiments.

In the specification, "multiple" refers to a number of uncertain, usually more than two. When "multiple" is used for indicating the number of certain components, it does not mean the relationship between these components in number.

Terms such as "first", "second", "third" and the like in the present application are only for the convenience of describing two or more structures or components with the same or similar structure, and do not indicate a particular limitation on the order.

### First Embodiment

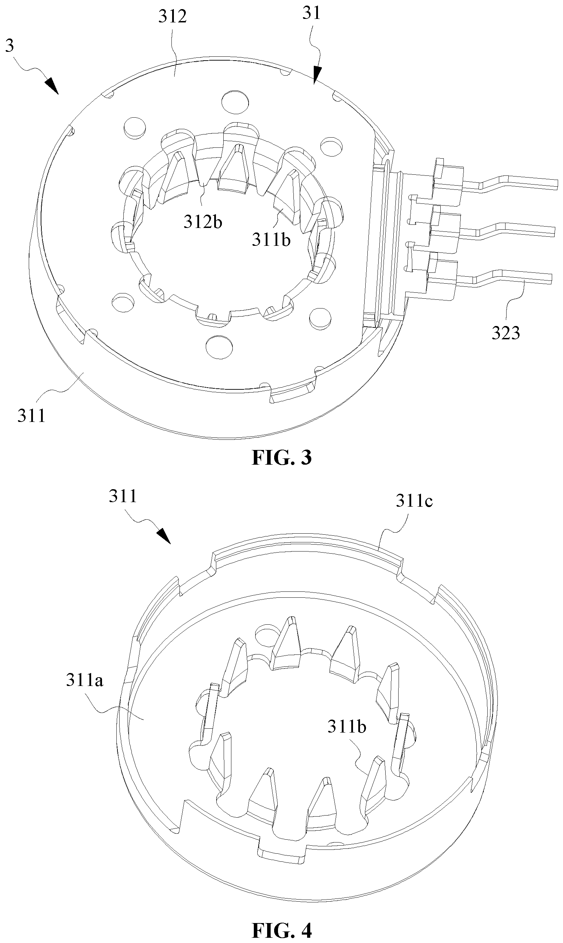

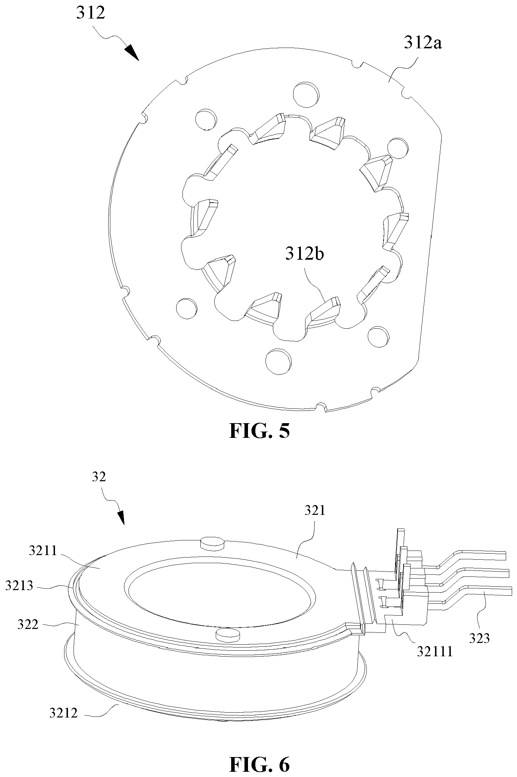

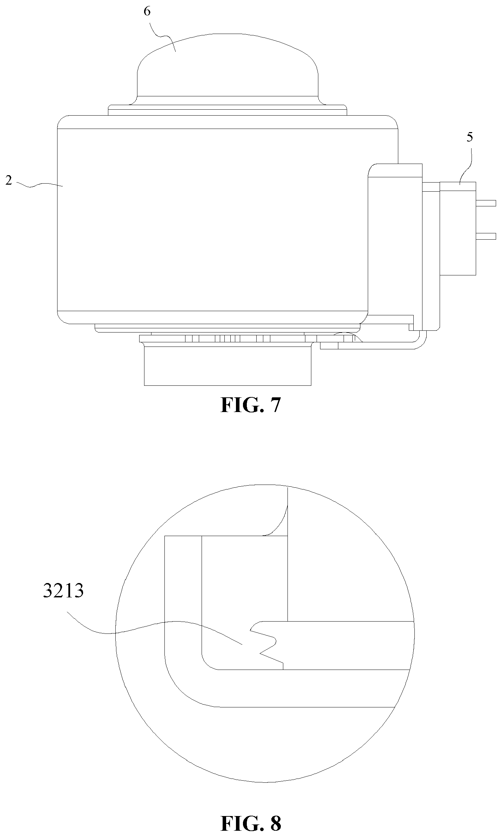

Referring to Figures 1 to 8, FIG. 1 is a schematic diagram of the structure of an electromagnetic coil provided by the present application; FIG. 2 is a schematic diagram of the structure of an annular body in FIG. 1; FIG. 3 is a schematic diagram of the structure of an assembly in FIG. 1; FIG. 4 is a schematic diagram of the structure of a stator shell in FIG. 1; FIG. 5 is a schematic diagram of the structure of an electromagnetic pole plate in FIG. 1; FIG. 6 is a schematic diagram of the structure of a winding in FIG. 1; FIG. 7 is a schematic diagram of the structure of the electromagnetic coil provided with a cap provided by the present application; FIG. 8 is a partial schematic diagram of an electromagnetic coil sealing part in FIG. 1.

As shown in FIG.1, an electromagnetic coil is provided by the present application, including an annular body 1, and an inner peripheral wall of the annular body 1 includes multiple claw poles spaced apart in a circumferential direction; the electromagnetic coil further includes an encapsulation layer 2, and the encapsulation layer 2 is capable of encapsulating an upper annular wall, a lower annular wall, and an outer peripheral wall of the annular body 1, but the encapsulation layer 2 is not disposed between the claw poles.

In a specific solution, as shown in FIG. 2 and FIG. 3 and in conjunction with FIG. 1, the annular body 1 may include two assemblies 3 that abut against in an axial direction. The two assemblies 3 may each include a ring-shaped shell 31 and a winding 32 arranged in the shell 31, and an inner peripheral wall of each shell 31 may include multiple claw poles spaced apart in the circumferential direction. The encapsulation layer 2 may encapsulate the outer peripheral walls of the two assemblies 3 and the two annular walls, which are opposite to each other in the axial direction, of the two assemblies 3, as is reflected in FIG. 2. That is, the upper and lower annular walls of the annular body 1 formed by the combination of the two assemblies 3 are encapsulated.

The shell 31 may include a stator shell 311 and an electromagnetic pole plate 312 that are buckled with each other. As shown in FIG. 4, the stator shell 311 may include a first annular wall 311a, and an inner periphery of the first annular wall 311 a may be provided with multiple first claw poles 311b spaced apart in the circumferential direction and extending in the axial direction. Each of the first claw poles 311b may be located on a side of the axial direction of the first annular wall 311a, and each of the first claw poles 311b may be substantially located on the same cylindrical surface, the outer periphery of the first annular wall 311a may be provided with a cylinder wall 311c extending in the same direction with the first claw poles 311b, the cylinder wall 311c may be located axially on the same side of the first annular wall 311a with each first claw pole 311b, the cylinder wall 311c is equivalent to the outer peripheral wall of the assembly 3, and the cylinder wall 311c may be parallel to the cylindrical surface where the first claw poles 311b are located. In this way, the first annular wall 311a, each of the first claw poles 311b, and the cylinder wall 311c may enclose to form an annular concave cavity, and the aforementioned winding 32 may be mounted in the concave cavity.

As shown in FIG. 5, the electromagnetic pole plate 312 may include a second annular wall 312a, and an inner periphery of the second annular wall 312a may be provided with multiple second claw poles 312b spaced apart in the circumferential direction and extending in the axial direction. Each of the second claw poles 312b may be located on a side of the axial direction of the second annular wall 312a, and each of the second claw poles 312b may be substantially located on the same cylindrical surface.

In the assembled state, referring to FIG. 3, the electromagnetic pole plate 312 may be buckled with the stator shell 311 to restrict the winding 32 in the cavity. Any one of the second claw poles 312b may be inserted between two adjacent first claw poles 311b, and any one of the first claw poles 311b may be inserted between two adjacent second claw poles 312b, that is, it makes the first claw poles 311b and the second claw poles 312b be inserted alternately with each other, and the alternately inserted first claw poles 311b and second claw poles 312b may form the inner periphery wall of the assembly 3.

As shown in FIG. 6, the winding 32 may include a frame 321 and a wire 322 wound around the frame 321, and the frame 321 includes a first collar portion 3211 and a second collar portion 3212. The first collar portion 3211 and the second collar portion 3212 are formed by extending radially from both sides of the frame 321. The winding 32 wound around the frame 321 is restricted between the first collar portion 3211 and second collar portion 3212 under the action of the first collar portion 3211 and the second collar portion 3212, so that the wire 322 is not easy to fall off the frame 321.

The frame 321 is made of a thermoplastic material, and the first collar portion 3211 has a pin holding part 32111 protruding from the circumferential surface, a pin 323 may be mounted on the pin holding part 32111, and the pin 323 is electrically connected with the wire 322. In the assembled state, the pin 323 may protrude from the shell 31, and the pins 323 of the two assemblies 3 may be fixed by an insulating sleeve 5.

In addition, a sealing part 3213 is further provided on the frame 321. The sealing part 3213 may be a flange structure formed by protruding from the surface of the frame 321, or a flange structure formed by defining a groove on the frame 321. Referring to FIG. 6 and FIG. 8, in this embodiment, a groove is defined at an outer periphery of the first collar portion 3211. The groove is similar to a groove-shaped structure formed by shrinking inwardly along the outer periphery of the first collar portion 3211. Correspondingly, upper and lower ends of the groove form a sealing part 3213. In addition, the pin holding part 32111 is also provided with a sealing part 3213, the sealing part 3213 protrudes along an axial direction of the pin holding part. In addition, the sealing part 3213 located at the outer periphery of the first collar portion 3211 may form a closed loop with the sealing part located at the pin holding part 32111. In addition, a groove is also provided at the outer periphery of the second collar portion 3212. The groove is similar to a groove-shaped structure formed by shrinking inwardly along the outer periphery of the second collar portion 3212. Correspondingly, upper and lower ends of the groove form a sealing part 3213.

In addition, besides the above forms, the sealing part 3213 may also be arranged in other forms. For example, the cross-sectional shape of the sealing part 3213 is a hook shape, a rectangular shape, a trapezoid shape, or various geometric shapes of a combination thereof.

In the process of subsequent injection molding to encapsulate the annular body 1, the temperature of the molten resin material is relatively high during injection molding, and when the molten resin material flows into the cavity to encapsulate the windings, it may come into contact with the surface of the sealing part provided on the frame, further, the frame 321 is made of a thermoplastic material, it melts when the temperature reaches the melting point of the material, thus the melted sealing part is fused with the melted resin material. After the temperature is cooled, the fused sealing part and the resin material are solidified, so that the frame and the encapsulation layer may be better combined together, and have a better sealing effect. In this way, since the encapsulation layer 2 is provided on the upper annular wall, the lower annular wall and the outer periphery wall of the annular body 1. However, the inner periphery wall including multiple claw poles is not provided with the encapsulation layer 2, so that the injection pressure required in the process of processing the encapsulation layer 2 is small, and the molding difficulty of the encapsulation layer 2 is greatly reduced, which is more conducive to ensuring product quality; at the same time, the required encapsulation materials may also be reduced to lower product manufacturing costs.

Moreover, since the frame and the encapsulation layer have a good sealing effect after fusion and curing, the moisture entering the annular body 1 through infiltration is not easy to enter the coil winding through the gap between the sealing part 3213 and the encapsulation layer, so that the coil may maintain good water resistance and insulation performance. In addition, due to the communication between the inside of the annular body 1 and the external space, the moisture that enters the annular body 1 through penetration or the like may be easily evaporated and discharged through the gaps between the claw poles and the two assemblies 3, so as to prevent a long-term existence of moisture in the annular body 1 from continuously eroding the joint between the encapsulation layer 2 and the annular body 1, and finally, the encapsulation structure is damaged, which may ensure the insulation and withstand voltage performance of the electromagnetic coil under the condition that high voltage is applied thermally.

### Second Embodiment

On the basis of the first embodiment, further structural changes may be made. As shown in FIG. 7, a sealing cap 6 may further be provided on the electromagnetic coil, and the sealing cap 6 may be sealed and fixed with the encapsulation layer 2, so as to seal and isolate the inner peripheral wall of the annular body 1. It may prevent the condensation water above the electromagnetic coil from dripping into the inner peripheral wall of the annular body 1 during use, and thus the rust and corrosion of the claw poles, thereby prolonging the service life of the electromagnetic coil.

The material of the sealing cap 6 may be plastic, stainless steel and other materials that are not easy to rust, preferably plastic, to improve the bonding ability with the encapsulation layer 2. Specifically, the sealing cap 6 may be fixed to the encapsulation layer 2 by ultrasonic welding or the like.

### Third Embodiment

In order to make the electromagnetic coil have the above structure, a mold is provided by the present application, which is used in the time of injecting the encapsulation layer 2.

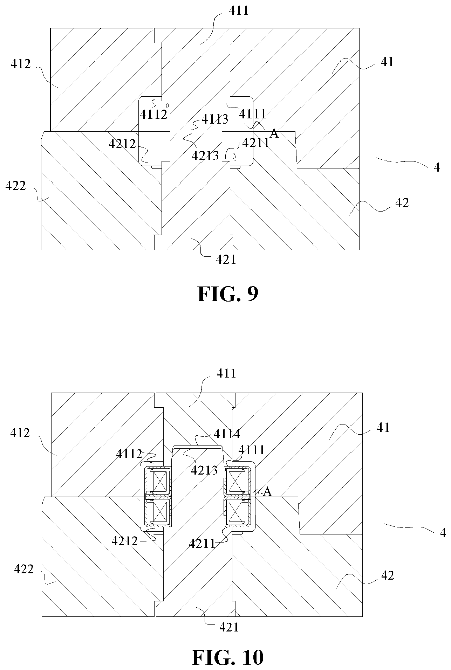

Referring to FIG. 9, the mold 4 includes an upper mold 41 and a lower mold 42. The mold 4 defines a mold cavity A, the mold cavity A is a space inside the mold 4. In addition, the mold 4 includes an injection port, and the injection port communicates with the mold cavity A for allowing the resin material to flow into the mold cavity A during subsequent injection molding.

In this embodiment, the upper mold 41 includes a first core part 411 and an upper mold body part 412, and the lower mold 42 includes a second core part 421 and a lower mold body part 422.

The upper mold body part 412 may be matched with the first core part 411. That is, the upper mold body part 412 is provided with a groove structure, and the shape of the groove structure matches the shape of the first core part 411. The first core part 411 may be mounted into the groove structure to realize a fixed connection between the first core part 411 and the upper mold body part 412. After the first core part 411 and the upper mold body part 412 are fixedly connected, the first core part 411 protrudes from a lower surface of the upper mold body part 412. In this way, a lower end surface of the first core part 411 forms a first abutting part 4111. The first core part 411 protrudes from an axial outer surface of the upper mold body part 412 and forms a first groove part 4112 with the upper mold body part 412. The first groove part 4112 is located outside the circumference of the first abutting part 4111.

Similarly, the lower mold body part 422 may be matched with the second core part 421. That is, the lower mold body part 422 is provided with a groove structure, and the shape of the groove structure matches the shape of the second core part 421. The second core part 421 may be mounted into the groove structure to realize the fixed connection between the second core part 421 and the lower mold body part 422. After the second core part 421 and the lower mold body part 422 are fixedly connected, the second core part 421 protrudes from an upper surface of the lower mold body part 422. In this way, an upper end surface of the second core part 421 forms the second abutting part 4211. The second core part 421 protrudes from an axial outer surface of the lower mold body part 422 and forms a second groove part 4212 with the lower mold body part 422. The second groove part 4212 is located outside the circumference of the second abutting part 4211.

During the injection molding, a lower annular wall of the annular body 1 may axially abut against the second abutting part 4211, and an upper annular wall of the annular body 1 may axially abut against the first abutting part 4111. At this time, the molten resin material cannot penetrate the gap between the annular body 1 and the first abutting part 4111 and the second abutting part 4112 to enter between the claw poles, so that no encapsulation layer is present between the claw poles. The space between the first groove part 4112 and the upper annular wall of the annular body 1 may be used for accommodating the resin material that encapsulates the upper annular wall. Similarly, the space between the second groove part 4212 and the lower annular wall of the annular body 1 may also be used for accommodating the resin material that encapsulates the lower annular wall. As a result, the upper annular wall, the lower annular wall and the outer periphery wall of the annular body 1 are provided therein with an encapsulation layer.

In addition, the second core part 421 may further include a second protrusion part 4213, the second protrusion part 4213 protrudes axially along the second abutting part 4211, and a radial size of the second protrusion part 4213 is smaller than a radial size of the second abutting part 4211. In addition, the second protrusion part 4213 matches with the annular body 1. That is, the second protrusion part 4213 may be inserted into a center hole of the annular body 1 from bottom to top, and its outer wall fits the inner peripheral wall of the annular body 1 to restrict the radial position of the annular body 1.

To further determine the position where the first core part 411 abuts against the annular body 1, the first core part 411 may further include a first protrusion part 4113. The first protrusion part 4113 protrudes axially along the first abutting part 4111, and a radial size of the first protrusion part 4113 is smaller than a radial size of the first abutting part 4111. In addition, the first protrusion part 4113 matches with the annular body 1. That is, the first protrusion part 4113 may be inserted into the center hole of the annular body 1 from top to bottom, and the outer wall of the first protrusion part 4113 fits the inner wall of the annular body 1 to determine the radial position of the annular body 1.

### Fourth Embodiment

In order to make the electromagnetic coil have the above structure, a second mold is further provided by the present application, which is used in the time of injecting the encapsulation layer 2.

Referring to FIG. 10, the mold 4 includes an upper mold 41 and a lower mold 42. The mold 4 defines a mold cavity A, the mold cavity A is a space inside the mold 4. In addition, the mold 4 includes an injection port, and the injection port communicates with the mold cavity A for allowing the resin material to flow into the mold cavity A during subsequent injection molding.

In this embodiment, the lower mold body part 422 may be matched with the second core part 421. That is, the lower mold body part 422 is provided with a groove structure, and the shape of the groove structure matches the shape of the second core part 421. The second core part 421 may be fitted into the groove structure to realize the fixed connection between the second core part 421 and the lower mold body part 422. After the second core part 421 and the lower mold body part 422 are fixedly connected, the second core part 421 protrudes from the upper surface of the lower mold body part 422. In this way, the upper end surface of the second core part 421 forms the second abutting part 4211. The second core part 421 protrudes from the axial outer surface of the lower mold body part 422 and forms a second groove part 4212 with the lower mold body part 422. The second groove part 4212 is located outside the circumference of the second abutting part 4211.

During injection molding, the lower annular wall of the annular body 1 may axially abut against the second abutting part 4211, and the upper annular wall of the annular body 1 may axially abut against the first abutting part 4111. The molten resin material cannot penetrate the gap between the annular body 1 and the first abutting part 4111 and the second abutting part 4112 to enter between the claw poles, so that no encapsulation layer is provided between the claw poles. The space between the first groove part 4112 and the upper annular wall of the annular body 1 may be used to accommodate the resin material that encapsulates the upper annular wall. Similarly, the space between the second groove part 4212 and the lower annular wall of the annular body 1 may also be used to accommodate the resin material that encapsulates the lower annular wall. As a result, the upper annular wall, the lower annular wall and the outer periphery wall of the annular body 1 are provided with an encapsulation layer.

In addition, the second core part 421 may further include a second protrusion part 4213, the second protrusion part 4213 protrudes axially along the second abutting part 4211, and the radial size of the second protrusion part 4213 is smaller than the radial size of the second abutting part 4211. In addition, the second protrusion part 4213 matches with the annular body 1. That is, the second protrusion part 4213 may be inserted into the center hole of the annular body 1 from bottom to top, and its outer wall fits the inner peripheral wall of the annular body 1 to restrict the radial position of the annular body 1.

To further determine the position where the first core part 411 abuts against the annular body 1, the first core part 411 may further include a first recess part 4114. The first recess part 4114 is matched with the second protrusion part 4213. Specifically, the first recess part 4114 is formed by the first abutting part 4111, and the first recess part 4114 is matched with the second protrusion part 4213. That is, the second protrusion part 4213 may be inserted into the first recess part 4114 from bottom to top, and its outer wall fits the inner peripheral wall of the first recess part 4114 to further restrict the position where the first core part 411 abuts against the annular body 1.

### Fifth Embodiment

In order to make the electromagnetic coil have the above structure, a method for manufacturing the electromagnetic coil is provided by the present application, including the following steps:
S1, configuring the annular body 1;
S2, assembling the annular body 1 in the mold cavity A of the mold 4;
S3, adding injection molding materials to perform injection molding so as to form the encapsulation layer 2.

For S1, the configuration process of the annular body 1 is an assembling process of the annular body 1. Referring to Figures 2-6 in the first embodiment: First, the pin 323 is inserted into the frame 321, and the wire 322 on the frame 321 is wound to form the winding 32; Then, the winding 32 is mounted into the shell 31 formed by the electromagnetic pole plate 312 and the stator shell 311 to form a single assembly 3; specifically, the electromagnetic pole plate 312 may be used as the base, the winding 32 is mounted on the electromagnetic pole plate 312, and then the stator shell 311 is mounted outside the electromagnetic pole plate 312 to form the assembly 3; After that, two assemblies 3 are butted along the axial direction, two electromagnetic pole plates 312 abut against each other, and the first annular walls 311a of the two stator shells are located at the two end faces of the assemblies 3; Finally, the insulating sleeve 5 is used to fix the pins 323 of the two assemblies 3. The formed annular body 1 may enter the next step to process the encapsulation layer 2.

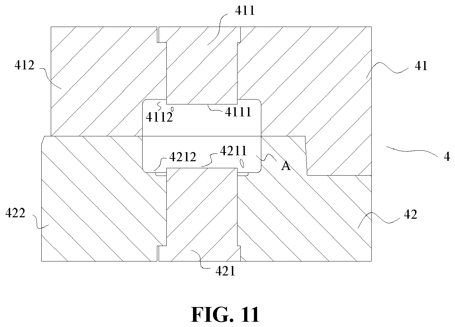

For S2, as shown in FIG. 11, the mold 4 may include the upper mold 41 and the lower mold 42. The mold 4 defines a mold cavity A, and the mold 4 has an injection port, the injection port communicates with the mold cavity A. The upper mold 41 includes the first abutting part 4111 and the first groove part 4112, and the lower mold 42 may include the second abutting part 4211 and the second groove part 4212.

After the assembly is completed, the annular body 1 is located in the mold cavity A, and the first abutting part 4111 and the upper annular wall are axially closely abutted and matched, and the second abutting part 4211 and the lower annular wall are axially tightly abutted and matched, so that the injection molding material cannot penetrate into the inner hole of the annular body 1 through the matching part.

For S3, based on the above structure of the mold 4, an encapsulation layer 2 that only encapsulates the outer periphery wall and the upper and lower annular walls of the annular body 1 may be formed after the injection molding is completed, thereby completing the encapsulation process of the electromagnetic coil.

As a further process step, for improving the anti-corrosion ability of the electromagnetic coil, S4 may be further implemented after S3. The sealing cap 6 is mounted on the encapsulation layer 2 by welding for sealing and isolating the inner peripheral wall of the annular body 1. The material of the sealing cap 6 may be plastic, stainless steel and other non-corrosive materials, preferably plastic, so as to improve the bonding ability with the encapsulation layer 2. Specifically, the sealing cap 6 may be fixed to the encapsulation layer 2 by ultrasonic welding, etc., which may prevent the condensed water above the electromagnetic coil from dripping into the inner peripheral wall of the annular body 1 during use, and prevent the claw pole from rusting and corroding, thereby ensuring the service life of the electromagnetic coil.

### Sixth Embodiment

In order to make the electromagnetic coil have the above structure, a method for manufacturing the electromagnetic coil is provided by the present application, including the following steps:
S1, configuring the annular body 1;
S2, assembling the annular body 1 in the mold cavity A of the mold 4;
S3, injection molding materials are added, and injection molding is performed to form the encapsulation layer 2.

For S1, the configuration process of the annular body 1 is the assembling process of the annular body 1. Referring to Figures 2-6 in the first embodiment: First, the pin 323 is inserted into the frame 321, and the wire 322 is wound on the frame 321 to form the winding 32; Then, the winding 32 is mounted into the shell 31 formed by the electromagnetic pole plate 312 and the stator shell 311 to form a single assembly 3; specifically, the electromagnetic pole plate 312 may be used as the base, the winding 32 is mounted on the electromagnetic pole plate 312, and then the stator shell 311 is mounted outside the electromagnetic pole plate 312 to form the assembly 3; After that, the two assemblies 3 are butted along the axial direction, the two electromagnetic pole plates 312 abut against each other, and the first annular walls 311a of the two stator shells are located at the two end faces of the assemblies 3; Finally, the insulating sleeve 5 is used to fix the pins 323 of the two assemblies 3. The formed annular body 1 may enter the next step to process the encapsulation layer 2.

For S2, as shown in FIG. 9, the mold 4 may include the upper mold 41 and the lower mold 42. The mold 4 defines the mold cavity A, and the mold 4 has the injection port, the injection port communicates with the mold cavity A. The upper mold 41 may include the first abutting part 4111, the first groove part 4112 and the first recess part 4114. The lower mold 42 may include the second abutting part 4211, the second groove part 4212, and the second protrusion part 4213.

After the assembly is completed, the annular body 1 is located in the mold cavity A, and the first abutting part 4111 and the upper annular wall are axially closely abutted and matched, and the second abutting part 4211 and the lower annular wall are axially tightly abutted and matched, In addition, the second protrusion part 4213 is located at the central hole of the annular body 1, and its outer wall fits the inner peripheral wall of the annular body 1, while the first protrusion part 4113 is located at the central hole of the annular body 1, and its outer wall fits the inner wall of the annular body 1.

For S3, based on the above structure of the mold 4, an encapsulation layer 2 that only encapsulates the outer periphery wall and the upper and lower annular walls of the annular body 1 may be formed after the injection molding is completed, thereby completing the encapsulation process of the electromagnetic coil.

As a further process step, for improving the anti-corrosion ability of the electromagnetic coil, S4 may be further implemented after S3. The sealing cap 6 is mounted on the encapsulation layer 2 by welding for sealing and isolating the inner peripheral wall of the annular body 1. The material of the sealing cap 6 may be plastic, stainless steel and other non-corrosive materials, preferably plastic, to improve the bonding ability with the encapsulation layer 2. Specifically, the sealing cap 6 may be fixed to the encapsulation layer 2 by ultrasonic welding, etc., which may prevent the condensed water above the electromagnetic coil from dripping into the inner peripheral wall of the annular body 1 during use, and prevent the claw pole from rusting and corroding, thereby ensuring the service life of the electromagnetic coil.

### Seventh Embodiment

In order to make the electromagnetic coil have the above structure, a method for manufacturing the electromagnetic coil is provided by the present application, including the following steps:
S1, configuring the annular body 1;
S2, assembling the annular body 1 in the mold cavity A of the mold 4;
S3, injection molding materials are added, and injection molding is performed to form the encapsulation layer 2.

For S1, the configuration process of the annular body 1 is the assembling process of the annular body 1. Referring to Figures 2-6 in the first embodiment: First, the pin 323 is inserted into the frame 321, and the wire 322 is wound on the frame 321 to form the winding 32; Then, the winding 32 is mounted into the shell 31 formed by the electromagnetic pole plate 312 and the stator shell 311 to form a single assembly 3; specifically, the electromagnetic pole plate 312 may be used as the base, the winding 32 is mounted on the electromagnetic pole plate 312, and then the stator shell 311 is mounted outside the electromagnetic pole plate 312 to form the assembly 3; After that, the two assemblies 3 are butted along the axial direction, the two electromagnetic pole plates 312 abut against each other, and the first annular walls 311a of the two stator shells are located at the two end faces of the assemblies 3; Finally, the insulating sleeve 5 is used to fix the pins 323 of the two assemblies 3. The formed annular body 1 may enter the next step to process the encapsulation layer 2.

For S2, as shown in FIG. 10, the mold 4 may include the upper mold 41 and the lower mold 42. The mold 4 defines a mold cavity A, and the mold 4 has an injection port, the injection port communicates with the mold cavity A. The upper mold 41 may include the first abutting part 4111, the first groove part 4112 and the first recess part 4114. The lower mold 42 may include the second abutting part 4211, the second groove part 4212, and the second protrusion part 4213.

After the assembly is completed, the annular body 1 is located in the mold cavity A, and the first abutting part 4111 and the upper annular wall are axially closely abutted and matched, and the second abutting part 4211 and the lower annular wall are axially tightly abutted and matched. In addition, the second protrusion part 4213 is located at the central hole of the annular body 1, and its outer wall fits the inner peripheral wall of the annular body 1, the second protrusion part 4213 is matched with the first recess part.

For S3, based on the above structure of the mold 4, an encapsulation layer 2 that only encapsulates the outer periphery wall and the upper and lower annular walls of the annular body 1 may be formed after the injection molding is completed, thereby completing the encapsulation process of the electromagnetic coil.

As a further process step, for improving the anti-corrosion ability of the electromagnetic coil, S4 may be further implemented after S3. The sealing cap 6 is mounted on the encapsulation layer 2 by welding for sealing and isolating the inner peripheral wall of the annular body 1. The material of the sealing cap 6 may be plastic, stainless steel and other non-corrosive materials, preferably plastic, to improve the bonding ability with the encapsulation layer 2. Specifically, the sealing cap 6 may be fixed to the encapsulation layer 2 by ultrasonic welding, etc., which may prevent the condensed water above the electromagnetic coil from dripping into the inner peripheral wall of the annular body 1 during use, and prevent the claw pole from rusting and corroding, thereby ensuring the service life of the electromagnetic coil.

It is worth noting that the present application does not limit the relationship between the first abutting part 4111 and the first core part 411, and the relationship between the first groove part 4112 and the upper mold body part 412. It also does not limit the relationship between the second abutting part 4211 and the second core part 421, and the relationship between the second groove part 4212 and the lower mold body part 422. In the technical solution of the present application, it is only necessary to have the first abutting part 4111, the first groove part 4112, the second abutting part 4211, and the second groove part 4212 in the mold 4. In the Third Embodiment and the Four Embodiment, only the first core part 411 and the upper mold body part 412 are fixedly connected, and the second core part 421 and the lower mold body part 422 are fixedly connected. In addition, a specific description is made when the first core part 411 and the upper mold body part 412 form the first groove part 4112, and the second core part 421 and the lower mold body part 422 form the second groove part 4212. In an actual production, those skilled in the art may understand that the first core part 411 and the upper mold body part 412, the second core part 421 and the lower mold body part 422 may be selected or all formed integrally. In addition, when the first core part 411 and the upper mold body part 412 are fixedly connected, the shapes of the first core part 411 and the upper mold body part 412 may be appropriately changed. For example, the first groove part 4112 is formed or partially formed on the first core part 411, and the second core part 421 and the lower mold body part 422 may also adopt similar structures, which is not repeated here.

The above embodiments are only preferred embodiments of the present application. It should be noted that, for those skilled in the art, other improvements and modifications may be further made without departing from the principle of the present application, and these improvements and modifications should also be deemed as falling into the protection scope of the present application.

## Claims

1. An electromagnetic coil, comprising an annular body (1), wherein an inner peripheral wall of the annular body (1) comprises a plurality of claw poles spaced apart in a circumferential direction, the electromagnetic coil further comprises an encapsulation layer (2) and a frame (321), and the encapsulation layer (2) encapsulates an upper annular wall, a lower annular wall, and an outer peripheral wall of the annular body (1), the encapsulation layer (2) is not disposed between the claw poles; the encapsulation layer (2) is formed of a resin material by injection molding , the frame (321) comprises a sealing part (3213), and the frame (321) is made of a thermoplastic material.

2. The electromagnetic coil according to claim 1, wherein the annular body (1) comprises two assemblies (3) that fit along the axial direction; the two assemblies (3) each comprise a ring-shaped shell (31) and a winding (32) arranged in the shell (31), and an inner peripheral wall of each shell (31) comprises a plurality of claw poles spaced apart in the circumferential direction;
the encapsulation layer (2) encapsulates the outer peripheral walls of the two assemblies (3), and partially encapsulates the two assemblies (3) along the upper annular wall and the lower annular wall which face each other in the axial direction.

3. The electromagnetic coil according to claim 2, wherein the shell (31) comprises a stator shell (311) and an electromagnetic pole plate (312), the stator shell (311) comprises a first annular wall (311a), and an inner periphery of the first annular wall (311a) is provided with a plurality of first claw poles (311b) spaced apart in the circumferential direction and extending in the axial direction; and each of the first claw poles (311b) is located on one side of the axial direction of the first annular wall (311a), an outer periphery of the first annular wall (311a) is provided with a cylinder wall (311c) extending in the same direction with the first claw pole (311b); the electromagnetic pole plate (312) comprises a second annular wall (312a), an inner periphery of the second annular wall (312a) is provided with a plurality of second claw poles (312b) spaced apart in the circumferential direction and extending in the axial direction; and each of the second claw poles (312b) is located on one side of the axial direction of the second annular wall (312a);
the electromagnetic pole plate (312) is buckled with the stator shell (311), and any one of second claw poles (312b) is located between two adjacent first claw poles (311b), and any one of first claw poles (311b) is located between two adjacent second claw poles (312b).

4. The electromagnetic coil according to claim 3, further comprising a sealing cap (6), wherein the sealing cap (6) is mounted on the encapsulation layer (2), and the material of the sealing cap (6) is plastic, and the sealing cap (6) is welded and fixed with the encapsulation layer (2).

5. A mold for injection molding electromagnetic coils, comprising an upper mold (41) and a lower mold (42), wherein the mold (4) defines a mold cavity (A), the upper mold (41) comprises a first abutting part (4111) and a first groove part (4112), and the lower mold (42) comprises a second abutting part (4211) and a second groove part (4212); the mold further comprises an injection port, and the injection port communicates with the mold cavity (A).

6. The mold according to claim 5, wherein the lower mold (42) comprises a second protrusion part (4213), the second protrusion part (4213) protrudes along an axial direction of the second abutting part (4211), a radial size of the second protrusion part (4213) is smaller than a radial size of the second abutting part (4211).

7. The mold according to claim 6, wherein the upper mold (41) comprises a first protrusion part (4113), the first protrusion part (4113) protrudes along an axial direction of the first abutting part (4111), a radial size of the first protrusion part (4113) is smaller than a radial size of the first abutting part (4111).

8. The mold according to claim 6, wherein the upper mold (41) comprises a first recess part (4114), the first recess part (4114) is recessed axially along the first abutting part (4111), a radial size of the first recess part (4114) is smaller than a radial size of the first abutting part (4111).

9. A method for manufacturing an electromagnetic coil, comprising the following steps:
S1, configuring an annular body (1), wherein the annular body (1) comprises an upper annular wall, a lower annular wall, an inner periphery wall and an outer periphery wall, and, an inner peripheral wall of the annular body (1) comprises a plurality of claw poles spaced apart in the circumferential direction;
configuring the mold (4), the mold (4) comprises an upper mold (41) and a lower mold (42), the mold (4) defines a mold cavity (A), the upper mold (41) comprises a first abutting part (4111) and a first groove part (4112), and the lower mold (42) comprises a second abutting part (4211) and a second groove part (4212); the mold further comprises an injection port, the injection port communicates with the mold cavity (A);
S2, placing the annular body (1) in the mold cavity (A) so that the first abutting part (4111) abuts against the upper annular wall of the annular body (1) in the axial direction, wherein the second abutting part (4211) abuts against the lower annular wall of the annular body (1) in the axial direction;
S3, adding injection molding materials and performing injection molding to form an encapsulation layer (2).

10. A method for manufacturing an electromagnetic coil, comprising the following steps:
S1, configuring an annular body (1), wherein the annular body (1) comprises an upper annular wall, a lower annular wall, an inner periphery wall and an outer periphery wall, and, an inner peripheral wall of the annular body (1) comprises a plurality of claw poles spaced apart in the circumferential direction;
configuring the mold (4), wherein the mold (4) comprises an upper mold (41) and a lower mold (42), the mold (4) defines a mold cavity (A), the upper mold (41) comprises a first abutting part (4111), a first groove part (4112), and a first protrusion part (4113), the first protrusion part (4113) protrudes along an axial direction of the first abutting part (4111), a radial size of the first protrusion part (4113) is smaller than a radial size of the first abutting part (4111); the lower mold (42) comprises a second abutting part (4211), a second groove part (4212), and a second protrusion part (4213), the second protrusion part (4213) protrudes along an axial direction of the second abutting part (4211), a radial size of the second protrusion part (4213) is smaller than a radial size of the second abutting part (4211), the mold further comprises an injection port, the injection port communicates with the mold cavity (A);
S2, placing the annular body (1) in the mold cavity (A) so that the first abutting part (4111) abuts against the upper annular wall of the annular body (1) in the axial direction, the second abutting part (4211) abuts against the lower annular wall of the annular body (1) in the axial direction; the first protrusion part (4113) is matched with the annular body (1), the second protrusion part (4213) is matched with the annular body (1);
S3, adding injection molding materials and performing injection molding to form an encapsulation layer (2).

11. A method for manufacturing an electromagnetic coil, comprising the following steps:
S1, configuring an annular body (1), wherein the annular body (1) comprises an upper annular wall, a lower annular wall, an inner periphery wall and an outer periphery wall, an inner peripheral wall of the annular body (1) comprises a plurality of claw poles spaced apart in the circumferential direction;
configuring the mold (4), wherein the mold (4) comprises an upper mold (41) and a lower mold (42), the mold (4) defines a mold cavity (A), the upper mold (41) comprises a first abutting part (4111), a first groove part (4112), and a first recess part (4114), the first recess part (4114) is recessed axially along the first abutting part (4112), a radial size of the first recess part (4114) is smaller than a radial size of the first abutting part (4111); the lower mold (42) comprises a second abutting part (4211), a second groove part (4212), and a second protrusion part (4213), the second protrusion part (4213) protrudes along an axial direction of the second abutting part (4211), a radial size of the second protrusion part (4213) is smaller than a radial size of the second abutting part (4211), the mold further comprises an injection port, the injection port communicates with the mold cavity (A);
S2, assembling the annular body (1) in the mold cavity (A); making the first abutting part (4111) abut against the upper annular wall of the annular body (1) in the axial direction, the second abutting part (4211) abuts against the lower annular wall of the annular body (1) in the axial direction; the second protrusion part (4213) is matched with the annular body (1); the second protrusion part (4213) is matched with the first recess part (4114);
S3, adding injection molding materials and performing injection molding to form an encapsulation layer (2).

12. The method for manufacturing the electromagnetic coil according to any one of claims 9 to 11, wherein the electromagnetic coil further comprises a sealing cap (6), and after S3, it further comprises:
S4, the sealing cap (6) is mounted on the encapsulation layer (2) by welding for sealing and isolating the inner peripheral wall of the annular body (1).
